# EUROPEAN PATENT SPECIFICATION

(11) **EP 1 599 372 B1**
(45) Date of publication and mention of the grant of the patent: **13.06.2012**
(21) Application number: 04715292.1
(22) Date of filing: 27.02.2004
(51) Int. Cl.: B61C 9/50

(54) **CONTAINMENT BRACKET FOR A DRIVE SHAFT**
SICHERHEITSHALTERUNG FÜR EINE ANTRIEBSWELLE
PATTE DE RETENUE POUR ARBRE D'ENTRAINEMENT

(30) Priority: 03.03.2003 GB 0304778
(43) Date of publication of application: 30.11.2005
(73) Proprietor: Bombardier Transportation GmbH, 13627 Berlin (DE)
(72) Inventor: COPPENS, Luc, 1410 Waterloo (BE)
(74) Representative: Broydé, Marc
(86) International application number: PCT/EP2004/001990
(87) International publication number: WO 2004/078551

(56) References cited:
- GB-A- 775 212
- US-A- 2 514 089
- US-A- 5 906 347

## Description

The invention relates generally to drive shaft systems and, more particularly, to a containment bracket of a drive shaft.

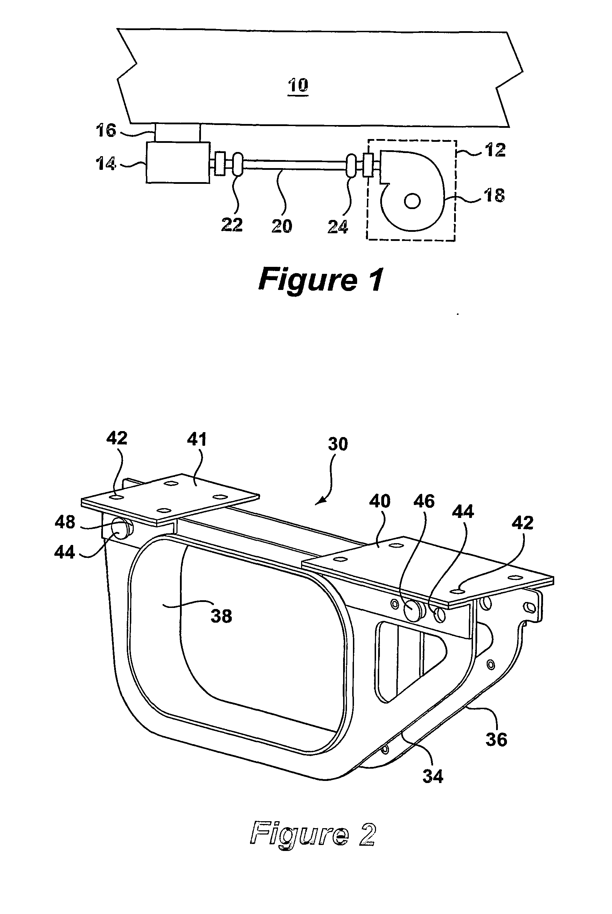

A typical drive arrangement used in trains features a traction motor attached to the train car body, a transfer gearbox mounted on a bogie, and a cardan shaft coupled to the motor and gearbox at each end to transfer power from the motor to the wheels. Fig. 1 shows a typical arrangement employing a cardan shaft. A portion of a train is shown including the underside of a car body (10) and bogie (12). A traction motor (14) is attached underneath the car body (10) via mounting arrangement (16) and a transfer gearbox (18) is mounted on the bogie (12). The gearbox (18) to connected to an inboard axle on which two wheels are mounted (not shown). A cardan shaft (20) is attached to the motor (14) and one end and the gearbox (18) at the other end via couplings (22, 24). In operation, the motor (12) transmits power via the cardan shaft (20) to the gearbox (18) and to each axle of the bogie in order to drive the wheels.

A containment bracket for a drive shaft with a opening through which a drive shaft extends is known from US 5906347 A.

A potential problem with the drive arrangement is the possibility that the cardan shaft may break or detach from the motor or the gearbox. Cardan shaft failure may be caused by excessive torque or torsional vibration resulting in structural failure of the cardan shaft, its joints or couplings, or poor assembly or maintenance of the final drive leading to separation of the couplings of the cardan shaft, the motor or the gearbox. Excessive torque on the cardan shaft may be caused by a bearing or mechanical failure in the motor resulting in a locked rotor, or a similar failure in the gearbox.

If the cardan shaft breaks or becomes detached at either end while the train is moving, the shaft may flail around and pierce the floor of the car body or cause other damage to the train and may possibly strike the ground and derail the bogie. The potential damage caused by a broken or detached cardan shaft increases considerably as the weight and speed of the vehicle increases, because of the increased weight and rotational speed of the cardan shaft.

The difficulty in containing a broken or detached cardan shaft also increases, because the increased weight and rotational speed of the cardan shaft results in much greater forces being exerted by the flailing shaft. In addition, as the speed of the train is increased, the time required to stop the train and thus stop rotation of the cardan shaft increases and a broken cardan shaft must be contained for a longer period.

Thus there is a need for a means to contain a drive shaft that has broken or become detached at either end for use with high speed vehicles.

The present invention provides a transmission system for a train comprising a car body, a bogie, a driving mechanism attached to the car body and a driven mechanism mounted on the bogie, the transmission system comprising a drive shaft couple to a driving mechanism at a first end and a driven mechanism at a second end, and a containment bracket comprising a bracket defining an opening through which the drive shaft extends and a flexible member positioned around at least a portion of the bracket and secured at each end. The dimensions of the opening are such as to provide clearance with the drive shaft allowing the drive shaft to move vertically and horizontally within the opening to accommodate the movements of the bogie, and the flexible member is maintained under tension. The flexible member comprises a cable, a plurality of cables, or a belt. The flexible member is wound around the bracket at least once, and may be secured at a first upper side of the bracket.

The bracket may comprises a flange defining the opening of the bracket and two webs positioned towards each edge of the flange, the flexible member being positioned around at least a portion of the flange between the webs. The containment bracket may also include a shaft failure detection system for detecting failure or decoupling of the drive shaft.

The features and advantages of the invention will be further described, by way of example only, having reference to the following drawings of embodiments of the invention, in which:
Fig. 1 shows a typical traction arrangement employing a cardan shaft;
Fig. 2 shows one embodiment of a bracket for containing a cardan shaft;
Fig. 3 is a plan view of the containment bracket of Fig. 2 including a cable belt wound around the bracket;
Fig. 4 is a side view of the containment bracket of Fig. 3 showing details of the cable belt;
Fig. 5 is a side view of a traction arrangement showing the position of the cardan shaft and the containment bracket of the present invention;
Fig. 6 is a plan view of the traction arrangement of Fig. 5 showing the position of the cardan shaft and the containment bracket;
Fig. 7 is a diagram showing the impact forces on the containment bracket of Fig. 3 resulting from a broken shaft; and
Fig. 8 is a perspective view of the containment bracket of Fig. 3 including a broken shaft detection system.

An embodiment of a containment bracket for a drive shaft is described below. Referring initially to Fig. 2, a containment bracket (30) is shown comprising two vertical webs (34, 36) and a rectangular flange (38) defining an opening through which the cardan shaft passes. The bracket (30) may be constructed of steel, metal alloy, plastic composite, or any other material providing the required resistance to impact necessary to contain the cardan shaft in the event of a detachment or breaking of the shaft.

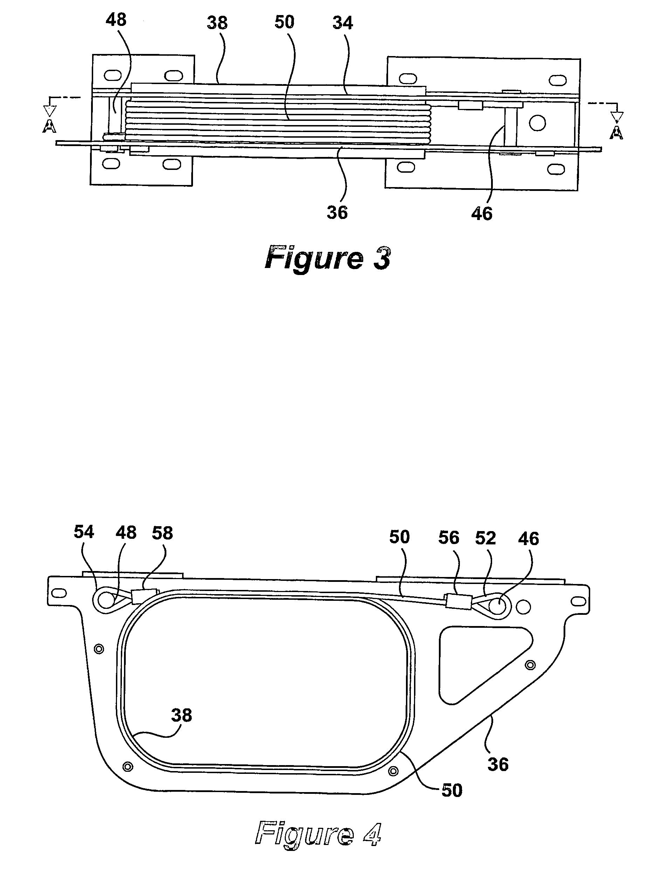

Angle brackets (40, 41) provide means for attachment of the bracket (30) to a suitable mounting structure to position the bracket to receive the cardan shaft. The bracket (30) may be bolted or welded to a supporting structure, or other suitable attachment means may be used, and mounting holes (42) in the angled brackets (40, 41) may be provided for this purpose. Holes (44) are provided at both ends of the bracket (30) in vertical webs (34, 36) for receiving dowels to secure the ends of the cable belt shown in Fig. 3 and described below.

A cable belt may also be used in conjunction with the bracket (30). Fig. 3 shows a bottom view of the containment bracket (30) with a cable (50) wound multiple times around the flange (38) of the bracket between the webs (34, 36) of the bracket. The cable (50) is preferably maintained under tension and secured by looping each end around dowels (46, 48) positioned in holes (44) in the webs (34, 36) of the bracket. In this way, the cable (50) is maintained as close as possible to the envelope of movement of the cardan shaft to accommodate the shaft's operational movements caused by the movement of the bogie and tilting displacements of the car body. The cable (50) is preferably made of a high tensile steel, kevlar, or similar material able to withstand the high tension and the shock of impacts from a detached cardan shaft. The cable could comprise a single strand or multiple strands that are woven, twisted, laid in parallel, or in any other suitable configuration.

Fig. 4 shows a side view taken through section A-A-of Fig. 3. A loop is formed at each end of cable (50), each loop passing around a collar (52, 54) which is positioned around the dowels (46, 48), and the ends of the cable being secured by clamps (56, 58). Other suitable means may also be employed to secure the ends of the cable (50) in order to hold the cable in tension around the bracket.

The cable (50) is shown in Figs. 3 and 4 wound from pin (48) along the upper edge of the flange (38) and wound clockwise around the flange, ending at pin (46). Alternatively, the cable could be wound from pin (48) down the left side edge of the flange (38) and along the bottom edge of the flange in an anticlockwise direction around the flange, ending at pin (46). In addition, although the containment bracket cable belt is described as comprising a cable wound multiple times around the containment bracket flange, the cable could be wound only once around the bracket or could be looped around the bottom edge of the flange (38) from pin (46) to pin (48) without encircling the bracket at all.

Another alternative is to use multiple cables instead of a single cable, each cable being looped or wound around the bracket once or multiple times. Although the cable is shown with round cross-section, a flat cross-section (forming a belt), square cross-section or any other suitable cross-section could be adopted.

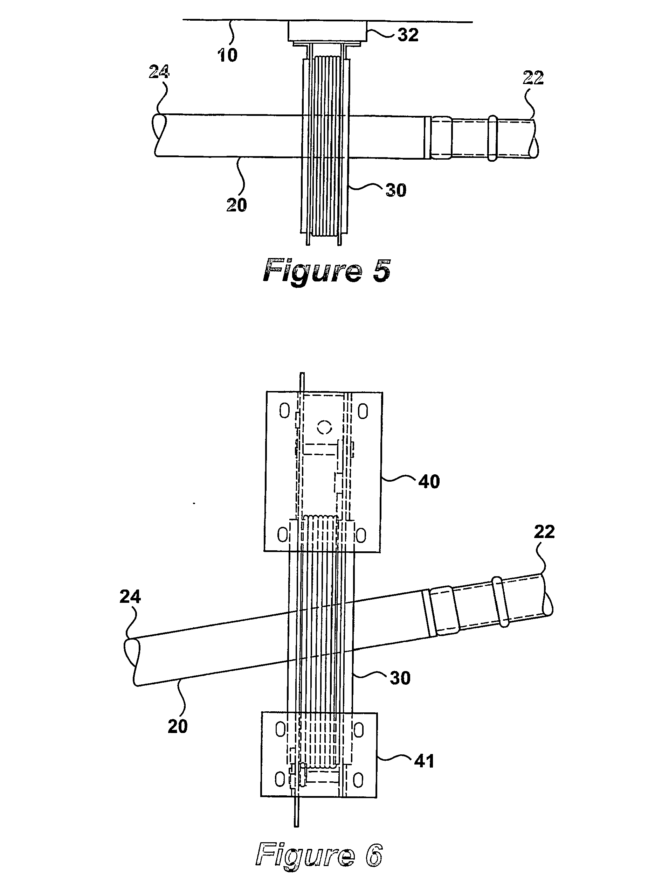

Fig. 5 shows a side view of bracket (30) attached to a mounting bracket (32) under the train car body (10). The cardan shaft (20) is connected to the motor via coupling (22) and extends through the bracket (30) to connect to the gearbox via coupling (24). The bracket (30) is mounted in a position to provide the necessary clearance between the cardan shaft and the rectangular flange (38) defining the opening in the bracket (30) through which the cardan shaft passes.

Fig. 6 shows a plan view of the bracket (30) and cardan shaft (20). As the bogie moves with respect to the car body, the cardan shaft will also move vertically and horizontally within the opening of the bracket (30). When the bracket (30) is used on tilting trains, the movement of the cardan shaft within the opening of the bracket will be more pronounced as the train negotiates a corner and the train body tilts with respect to the bogie. The opening in the bracket (30) must be dimensioned correctly and the bracket positioned correctly to accommodate this movement of the cardan shaft.

As discussed above, failure of the cardan shaft may be caused by excessive torque resulting from seizure of the gearbox or motor. Seizure of the gearbox will cause increased slip in the traction motor which will react by developing its maximum torque. In a worst-case situation, this sudden torque reaction may excite the drive line natural frequency and a dynamic torque of twice the maximum torque may be generated in the cardan shaft by the motor. In the event of a seized motor, the maximum torque generated in the cardan shaft is limited to the maximum wheel to rail adhesion.

A cardan shaft failure resulting in separation between the cardan shaft and the gearbox will result in a no-load situation occurring on the traction motor. The traction system will typically detect a no-load condition on the motor and the system will power down the motor. The level of stored energy in this situation is relatively low, being proportional to the rotational inertia of the motor's rotor and the cardan shaft. In this situation, the bracket must be able to contain the detached cardan shaft for the deceleration time of the motor and shaft.

A cardan shaft failure resulting in separation between the cardan shaft and the motor will result in the shaft rotating at the gearbox input shaft speed. The shaft will continue to rotate at a fixed ratio to the axle speed as long as the train continues to move. As above, the traction system will typically detect a no-load condition on the motor and the system will power down the motor. In this situation, the bracket must be able to contain the detached cardan shaft for the deceleration time of the train.

In the situation where the cardan shaft separates from the traction motor at the traction motor end, containment of the cardan shaft is required until the train is brought to a stop. It is expected that there will be a high number of consecutive impacts of the cardan shaft against the containment bracket during this period, mostly along the bottom edge of the bracket. Although the cardan shaft is more likely to separate at the gearbox end due to higher vibration levels at this end, the containment bracket is preferably designed to sustain impacts caused by the worse case scenario. Simulations have shown that a detached cardan shaft behaves like an off-centered spinning top and that the trajectory of the shaft results from the initial velocity of the principal axis of inertia of the system and the rotation of the shaft about this axis. As a consequence, the shaft follows a cycloidal trajectory in a plane that is perpendicular to its principal axis.

A study of simulated impact cases reveals that the total force of the cardan shaft against the containment bracket is proportional to the initial speed of the cardan shaft. Maximum stress in the web of the containment bracket increases linearly with the level of force of impact of the cardan shaft against the containment bracket. If the cardan shaft separates at the motor end, the break detection system will typically cause the train to undergo emergency braking. During the period until the emergency braking is applied and until the train is brought to a complete stop, the containment bracket must be able to survive multiple impacts from the cardan shaft against the bracket.

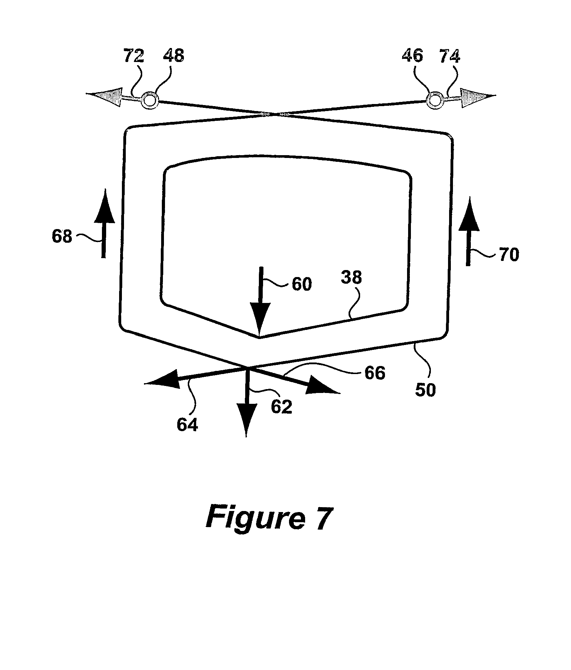

Fig. 7 is a diagram showing the forces on a containment bracket (30) having a cable belt (50) due to an impact by the cardan shaft during a shaft failure. The load transferred to the bracket (30) by an impact is shown by the arrow (60). This results in a load (62) being transferred to the cable belt (50). The load (62) is transferred to the cable belt as tensile force (64, 66) in each half of the cable belt. These tensile forces (64, 66) are opposed by tensile forces (represented by arrows 68, 70) within each winding of the cable belt caused by friction of the individual cable windings against the webs (34, 36) and the flange (38) of the containment bracket and against neighbouring cable windings, and by tensile forces (represented by arrows 72, 74) at the supporting pins (46, 48).

A large impact may cause the containment bracket to undergo plastic deformation resulting in a permanent dent in the bracket, as shown in Fig. 7. During such an impact, the cable belt (50) is under tension and will undergo elastic deformation (and may also undergo some amount of plastic deformation resulting in the cable windings being permanently stretched by a small amount). The elastic deformation of the cable belt assists the containment bracket in resisting a succession of impacts caused by the flailing of a failed cardan shaft and preventing the bracket from breaking and releasing the cardan shaft.

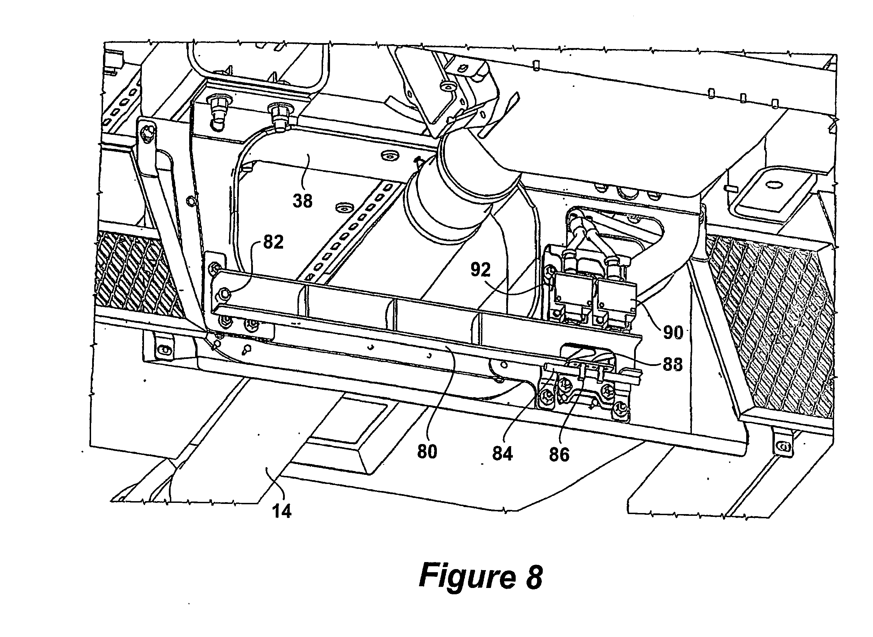

Fig. 8 shows a containment bracket with a broken cardan shaft detection system. The detection system comprises a strut (80) positioned horizontally, adjacent to and slightly above the lower inside surface of flange (38). Strut (80) is fixed at one end at pivot point (82). The other end of strut (80) is positioned between a breakable tube (84) and detectors (90, 92) mounted on plate (94) to facilitate correct positioning. Breakable tube (84) is held in place by clips (86) adjacent to a cutout portion (88) of the strut (80), so the lower edge of strut (80) rests against breakable tube (84) at each end of the tube.

If the cardan shaft breaks or becomes decoupled it will move outside its permitted and normal range of movement and strike the upper edge of strut (80). The strut (80) will rotate clockwise about pivot point (82) so that pressure is exerted at each end of breakable tube (84). If the impact from the cardan shaft against strut (80) is sufficiently large, the pressure on breakable tube (84) will cause it to break, permitting strut (80) to rotate further clockwise so that the upper edge of strut (80) moves away from the detectors (90, 92). Other suitable elements may be substituted for breakable tube (84), such as metal or plastic elements that bend under pressure, springs, or rubber elements. Alternatively, this element may be omitted and strut (80) may be fixed and designed to rotate only when struck by the cardan shaft with sufficient force, or designed to bend under such force.

Detectors (90, 92) generate signals when the upper edge of strut (80) moves away from the detectors to indicate that a cardan shaft failure has occurred. Detectors (90, 92) may be pressure switches, position switches, magnetic sensors, or any other suitable type of proximity sensor. Two detectors (90, 92) are used in the embodiment shown to provide signals for two different systems, although a single detector could be used to generate a signal for both systems, or two detectors could be used to provide redundancy. The detectors are preferably positioned so that the strut (80) is moved away from the detectors under the impact of a broken or decoupled cardan shaft. Alternatively, the detectors could be positioned alongside or underneath the strut and designed so that they detect any motion of the strut relative to the detector.

The signals generated by detectors (90, 92) can be used to provide a cardan shaft failure signal to a train management system to alert the train driver to the failure, and to provide a signal to a train control system to cause the system to automatically take action.

Thus, one embodiment of a means to contain a drive shaft that has broken or become decoupled has been described. It should be noted that the embodiments described above are susceptible to various modifications and alternative forms. For example, although the containment bracket is described for use with a cardan shaft in a train, it could be used for any application where a high speed shaft is employed, in a vehicle transmission system, industrial or agricultural machinery, and where the shaft transmits power between any type of driving means to any type of driven means. Although the bracket is described mounted at the upper edge of the bracket, the bracket could be mounted at the sides or bottom. The bracket is shown as a single piece fully encircling the cardan shaft, but the bracket could alternatively be constructed as two or more pieces that are bolted or welded together to encircle the cardan shaft, or could be constructed in a "U" shape or "C" shape that does not fully encircle the cardan shaft but still provides some protection in the event of a shaft failure.

## Claims

1. A transmission system for a train comprising a car body, a bogie, a driving mechanism attached to the car body and a driven mechanism mounted on the bogie, the transmission system comprising:
a drive shaft (20) coupled to the driving mechanism (14) at a first end and a driven mechanism (18) at a second end; and
a containment bracket, comprising a bracket (30) defining an opening through which the drive shaft (20) extends and a flexible member (50) positioned around at least a portion of the bracket and secured at each end, the dimensions of the opening being such as to provide clearance with the drive shaft allowing the drive shaft (20) to move vertically and horizontally within the opening to accommodate the movements of the bogie, **characterized in that** the flexible member (50) comprises a cable, a plurality of cables or a belt and **in that** the flexible member (50) is wound around the bracket at least once and maintained under tension and an end of the flexible member (50) is secured at an upper side of the bracket (30).

2. The transmission system of claim 1, wherein the bracket (30) comprises a flange (38) defining the opening of the bracket and two webs (34, 36) positioned towards each edge of the flange, the flexible member (50) being positioned around at least a portion of the flange between the webs.

3. The transmission system of any one of the preceding claims, further comprising a shaft failure detection system comprising:
a strut (80) positioned adjacent to an inside surface of flange (38), the strut moveable under the impact of the shaft when broken or decoupled; and
at least one detector (90, 92) positioned adjacent to one end of the strut (80), the detector generating a shaft failure signal when the strut (80) is moved under the impact of the shaft when broken or decoupled.

4. The transmission system of claim 3, wherein the movement of the strut (80) is restricted by an element (84) which yields and permits the strut to move when the strut is struck by the shaft when broken or decoupled.

5. The transmission system of claim 3, wherein the detectors (90, 92) provide a shaft failure signal to a train management system for indication of a shaft failure.

## Patentansprüche

1. Ein Übertragungssystem für einen Zug, mit einem Wagenkasten, einem Drehgestell, einem am Wagenkasten befestigten Antriebsmechanismus und einem auf dem Drehgestell montierten angetriebenen Mechanismus, wobei das Übertragungssystem folgendes umfasst:
ein mit dem Antriebsmechanismus (14) an einem ersten Ende und mit dem angetriebenen Mechanismus (18) an einem zweiten Ende gekoppelter Antriebsschaft (20); und
eine Aufnahmehalterung mit einem Bügel(30), welcher eine Öffnung definiert, durch welche sich der Antriebsschaft (20) erstreckt, und mit einem flexiblen Teil (50) welches um wenigstens einen Teil des Bügels angeordnet und an jedem Ende befestigt ist, wobei die Abmessungen der Öffnung ein Spiel mit dem Antriebsschaft bieten und dem Antriebsschaft (20) eine vertikale und horizontale Bewegung innerhalb der Öffnung erlauben, um die Bewegungen des Drehgestells aufzunehmen,
**dadurch gekennzeichnet dass** das flexible Teil (50) ein Kabel, eine Mehrzahl Kabel oder ein Band umfasst, dass das flexible Teil (50) wenigstens einmal um den Bügel gewunden ist, unter Spannung gehalten ist und dass ein Ende des flexiblen Teils (50) an einer oberen Seite des Bügels (30) befestigt ist.

2. Das Übertragungssystem gemäß Anspruch 1, wobei der Bügel (30) einen Flansch (38), welcher die Öffnung des Bügels definiert und zwei gegen jeden Rand des Flanschs angeordnete Tragrippen (34,36) umfasst, wobei das flexible Teil (50) um wenigstens einen Teil des Flansches zwischen den Tragrippen angeordnet ist.

3. Das Übertragungssystem gemäß einem der vorhergehenden Ansprüche, des weiteren ein Schaftversagen-Detektionssystem umfassend, mit einer Strebe (80), welche an eine innere Fläche des Flansches (38) angrenzend angeordnet ist, wobei die Strebe unter dem Aufschlag des Schaftes bewegbar ist, wenn dieser zerbrochen oder entkoppelt ist; und
wenigstens einem Detektor (90,92) welcher an ein Ende der Strebe (80) angrenzend angeordnet ist, wobei der Detektor ein Schaftversagenssignal erzeugt, wenn die Strebe (80) unter dem Aufschlag des gebrochenen oder entkoppelten Schaftes bewegt wird.

4. Das Übertragungssystem gemäß Anspruch 3, wobei die Bewegung der Strebe (80) durch ein Element (84) begrenzt ist, welches nachgibt und die Bewegung der Strebe erlaubt, wenn die Strebe durch den gebrochenen oder entkoppelten Schaft angeschlagenen wird.

5. Das Übertragungssystem gemäß Anspruch 3, wobei die Detektoren (90,92) ein Schaftversagenssignal an ein Zugmanagement System liefern, um ein Schaftversagen anzuzeigen.

## Revendications

1. Système de transmission pour un train comportant une caisse, un bogie, un mécanisme d'entraînement fixé à la caisse et un mécanisme entraîné monté sur le bogie, le système de transmission comprenant :
un arbre menant (20) accouplé au mécanisme d'entraînement (14) à une première extrémité et à un mécanisme entraîné (18) à une deuxième extrémité ; et
une console de retenue comportant une console (30) définissant une ouverture au travers de laquelle l'arbre menant (20) s'étend et un élément flexible positionné autour d'au moins une portion de la console et fixé à chaque extrémité, les dimensions de l'ouverture étant telles qu'elle assurent un jeu avec l'arbre menant permettant à l'arbre menant (20) de bouger verticalement et horizontalement à l'intérieur de l'ouverture pour permettre les mouvements du bogie, **caractérisé en ce que** l'élément flexible comprend un câble, une pluralité de câbles ou une ceinture et **en ce que** l'élément flexible est enroulé autour de la console au moins une fois et maintenu sous tension et une extrémité de l'élément flexible (50) est fixée à un côté supérieur de la console (30).

2. Système de transmission selon la revendication 1, dans lequel la console (30) comprend une bride (38) définissant l'ouverture de la console et deux nervures (34, 36) positionnées vers chaque bord de la bride, l'élément flexible (50) étant positionné autour d'au moins une partie de la bride entre les nervures.

3. Système de transmission selon l'une quelconque des revendications précédentes, comportant en outre un système de détection de défaut d'arbre, comportant :
a. une jambe (80) adjacente à une surface intérieure de la bride, la jambe étant mobile sous l'impact de l'arbre cassé ou désaccouplé, et
b. au moins un détecteur (90, 92) adjacent à une extrémité de la jambe (80) le détecteur générant un signal de défaut d'arbre lorsque la jambe (80) est déplacée sous l'impact de l'arbre cassé ou désaccouplé.

4. Système de transmission selon la revendication 3, dans lequel le mouvement de la jambe est limité par un élément (84) qui se déforme et permet à la jambe de se déplacer lorsque la jambe est frappée par l'arbre cassé ou désaccouplé.

5. Système de transmission selon la revendication 3, dans lequel les détecteurs (90, 92) délivrent un signal de défaut d'arbre à un système de gestion du train pour l'indication d'un défaut d'arbre.
